# EUROPEAN PATENT SPECIFICATION

(11) **EP 1 136 731 B1**
(45) Date of publication and mention of the grant of the patent: **05.07.2006**
(21) Application number: 01300693.7
(22) Date of filing: 26.01.2001
(51) Int. Cl.: F16J 15/08, F02F 11/00

(54) **Metal gasket**
Metalldichtung
Joint métallique

(30) Priority: 23.03.2000 JP 2000082120; 23.03.2000 JP 2000082121; 23.03.2000 JP 2000082122
(43) Date of publication of application: 26.09.2001
(73) Proprietor: NICHIAS CORPORATION, Tokyo (JP)
(72) Inventor: Fujino, Michio, Yokohama-shi, Kanagawa-ken (JP); Ueda, Katsunori, Toyota-shi, Aichi-ken (JP); Kumasaka, Toshihiko, Yokohama-shi, Kanagawa-ken (JP); Seki, Masaya, Yokohama-shi, Kanagawa-ken (JP)
(74) Representative: Setna, Rohan P.

(56) References cited:
- EP-A- 0 505 693
- DE-A- 3 718 569
- DE-A- 19 809 755
- US-A- 4 754 982
- US-A- 5 727 791

## Description

The present invention relates to a gasket and, in particular, but not exclusively, to a metal gasket, which may be used for sealing a three-contact area portion of a cylinder block, a chain case and a cylinder head construction of an internal combustion engine.

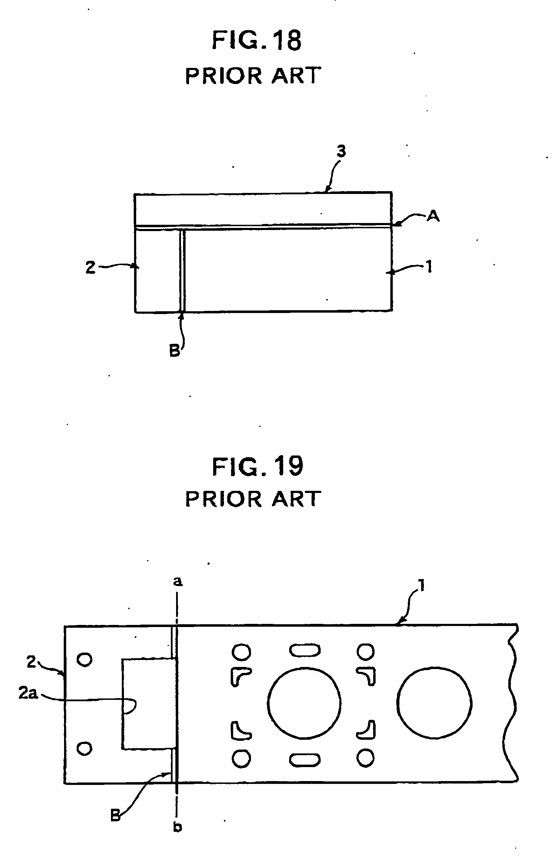

In a chain driven engine, an independently manufactured chain case 2 is provided in tight contact with a cylinder block 1, as shown in Figs. 19 and 19. In a three-contact area portion, i.e. the contact area between the chain case 2 and cylinder block 1, and the underside of cylinder head 3, there is provided a metal gasket A. Therefore, the above-described three contact area portion requires an additional seal function. B is a metal gasket provided in the contact area between the cylinder block 1 and the chain case 2.

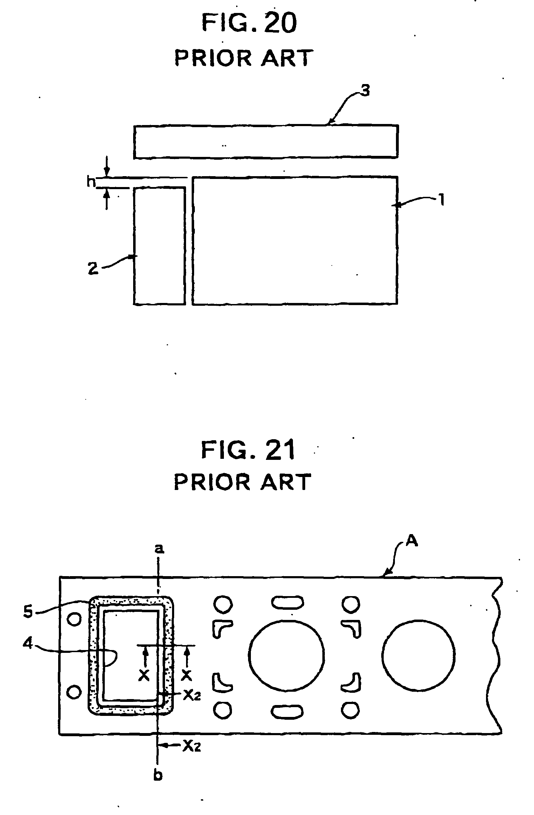

In these structures comprising a separate chain case 2 and cylinder block 1, a gap h may arise owing to thermal expansion differences between the cylinder block 1 and the chain case 2, as shown in Fig. 20.

The occurrence of the above-mentioned gap h leads to a decrease in the seal function. To counter this, the edge of an opening for chain 4 of the metal gasket may be provided with an elastic seal member having, for example, a semicircle cross-sectional view and comprising, for example, an elastomer bead or the like. A combination of a liquid gasket and a gasket member may be used to achieve a good seal.

However, when a cylinder head and chain case and/or cylinder block is overtightened, then liquid gasket material may seep out due to the overtightening pressure and the rubber-like elastomer may be degradated. As a result, a crack may occur, or the sealing function may be decreased due to the decrease in rubber elasticity. This can result in an engine oil leakage.

VS-A-5,727,791 relates to a metallic single- or multilayer cylinder head gasket.

The present invention aims to address at least some of the problems associated with the prior art.

In accordance with the present invention, there is provided a metal gasket (A) for sealing a three-contact area region of a cylinder block, a chain case and a cylinder head, the metal gasket (A) comprising
a through opening (4) configured to receive a chain therethrough and having an elastic seal member (7) provided on an inner rim perimeter thereof, and
storing means (8, 10) configured to receive therein a liquid gasket material disposed in said region and being used for sealing said region together with said metal gasket (A),
characterised in that said storing means (8, 10) is defined by an enlargement (7a) of the through opening (4), the enlargement (7a) being located within the perimeter of the elastic seal member (7) and defining a cavity (10),
and by a through hole (8) provided externally of the elastic seal member (7) and adjacent to said enlargement (7a),
and in that said cavity (10) and said through hole (8) are configured to contain, in use, liquid gasket material squeezed therein in response to overtightening the connection between the cylinder head and the chain case and/or the cylinder block to thereby prevent contact of the liquid gasket material with the elastic seal member (7).

Preferred features of the present invention are set forth in dependent claims 2 to 5 of the claims annexed hereto.

The objects and features of the present invention will become more apparent from the consideration of the following detailed description taken in conjunction with the accompanying drawings, provided by way of example, in which:
Fig. 1 is a plan view showing an example of a main metal gasket (not in accordance with the present invention);
Fig. 2 is a magnified cross-sectional view along a line Y₁-Y₁ of the metal gasket of Fig. 1;
Figs. 3 (I) to 3 (III) are cross-sectional views showing an example of an elastic seal member conjugating a metal gasket (not in accordance with the present invention);
Fig. 4 is an explanation drawing showing an example of an elastic seal member for a chain case cover hole (not in accordance with the present invention);
Fig. 5 is a plan view showing an example of a main metal gasket (not in accordance with the present invention);
Fig. 6 is a magnified cross-sectional view along a line Y₂-Y₂ of the metal gasket of Fig. 5;
Fig. 7 is a plan view showing an example of a main metal gasket (not in accordance with the present invention);
Fig. 8 is a magnified cross-sectional view along a line Y₃-Y₃ of the metal gasket of Fig. 7;
Fig. 9 is a plan view showing an embodiment of a main metal gasket in accordance with the present invention;
Fig. 10 is a magnified cross-sectional view along a line Y₄-Y4 of the metal gasket of Fig. 9;
Fig. 11 is a plan view showing another embodiment of a main metal gasket in accordance with the present invention;
Fig. 12 is a magnified cross-sectional view along a line Y₅-Y₅ of the metal gasket of Fig. 11;
Fig. 13 is a plan view showing an example of a main metal gasket (not in accordance with the present invention);
Fig. 14 is a magnified cross-sectional view along a line Y₁-Y₁ of the metal gasket of Fig. 13;
Figs. 15 (I) to 15 (III) are cross-sectional views showing an example of an elastic seal member conjugating a metal gasket (not in accordance with the present invention);
Fig. 16 is an explanation drawing showing a configuration of an elastic seal member for a chain case cover hole (not in accordance with the present invention);
Fig. 17 is a magnified cross-sectional view along a line Y₂-Y₂ of the metal gasket of Fig. 16;
Fig. 18 is an outline drawing of a chain driving engine (prior art);
Fig. 19 is a plan view of the engine (prior art);
Fig. 20 is a drawing of the above engine shown disassembled (prior art);
Fig. 21 is a plan view of a metal gasket for a chain driving engine (prior art);

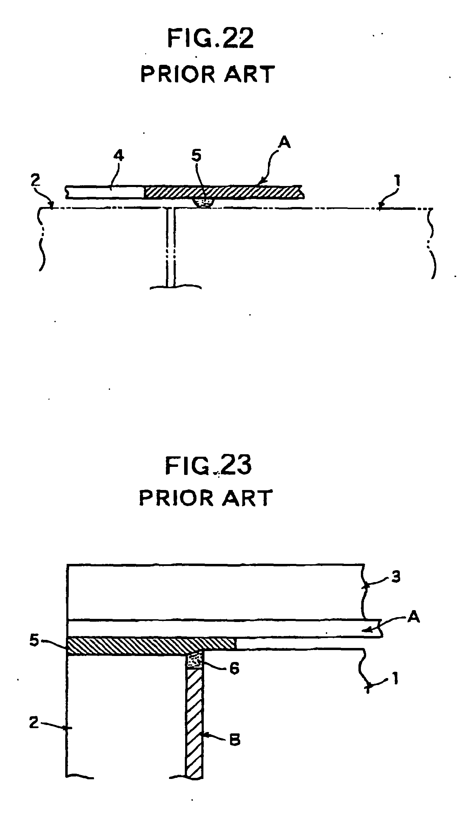

Fig. 22 is a magnified cross-sectional view along a line X-X of Fig. 21 (prior art); and
Fig. 23 is a side view showing the construction of a part combining a liquid gasket material with a metal gasket (prior art).

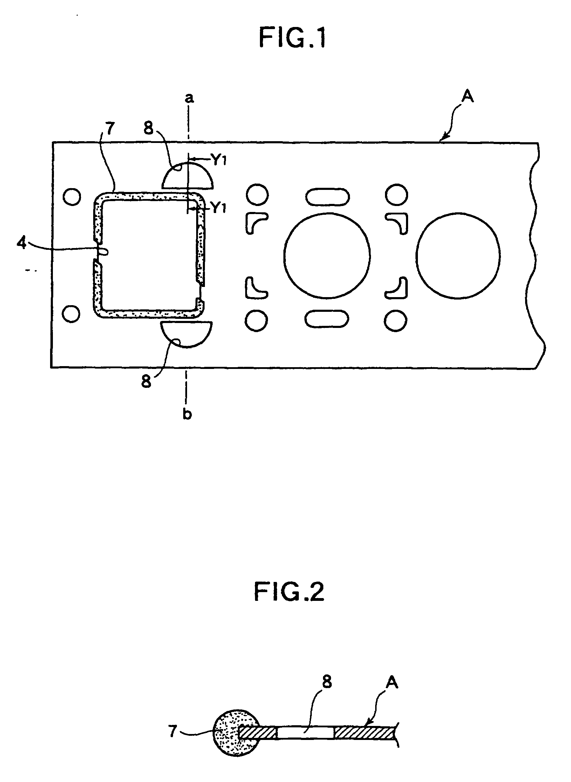

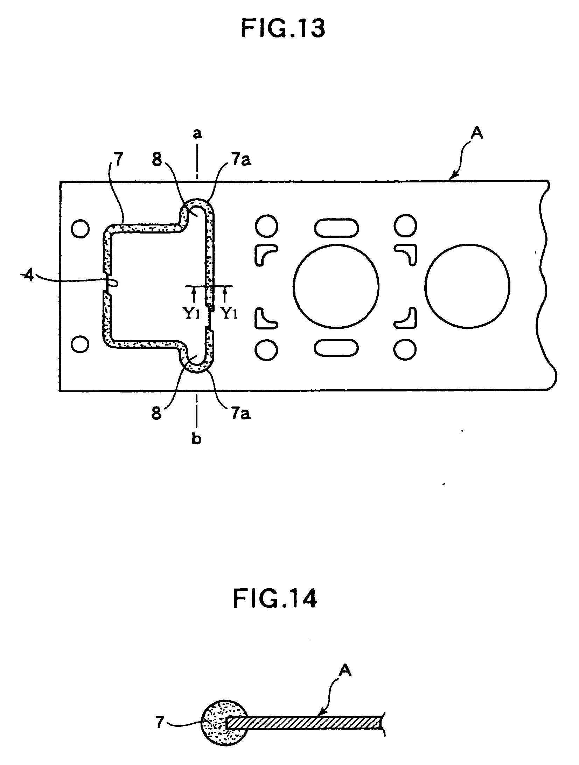

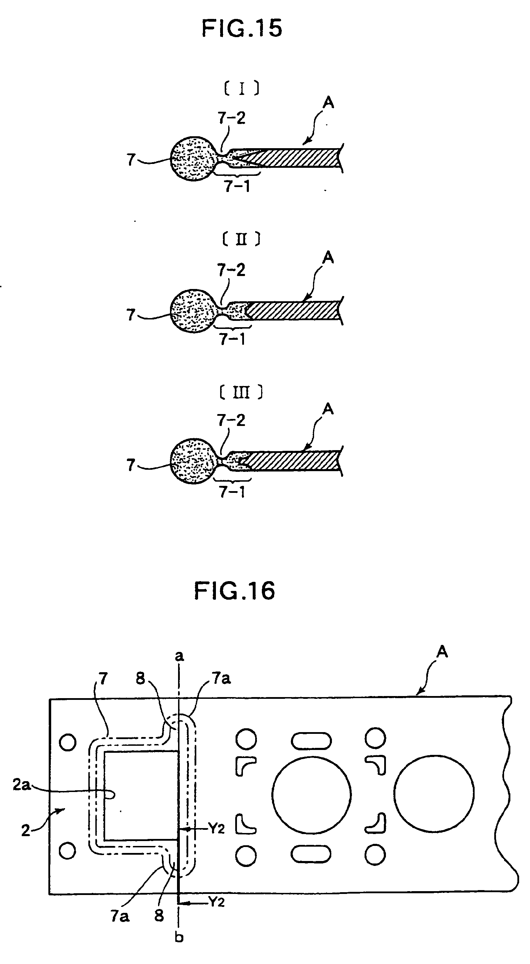

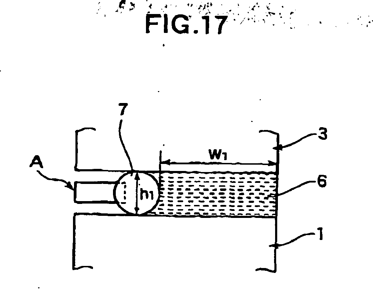

Referring to the drawings, in Figs. 1 to 4, an example of a metal gasket is shown (not in accordance with the present invention). In the Figs. 13 to 17, the same or similar member(s) of Figs. 1 to 4 are suffixed by the same numerals.

A is a metal gasket. In inner side edge of the metal gasket A of an opening for a chain 4, a rubber elastic seal member 7 having a circular cross-section is set for interposing. In the metal gasket A, a through opening portion 8 is set in a metal part of outside of the three contacting area portion of a elastic seal member 7.

By applying to above constitution, when a cylinder head and chain case and/or cylinder block is overtightened, the liquid gasket material can be uppermost prevented to adhere the rubber made elastic seal member 7.

By applying to above constitution which is set in inner rim of the metal gasket A of an opening for chain 4, a rubber elastic seal member 7 having a circle cross section for interposing, there is an advantage that the liquid gasket material can be stored through an amount of depth of the seal member diameter.

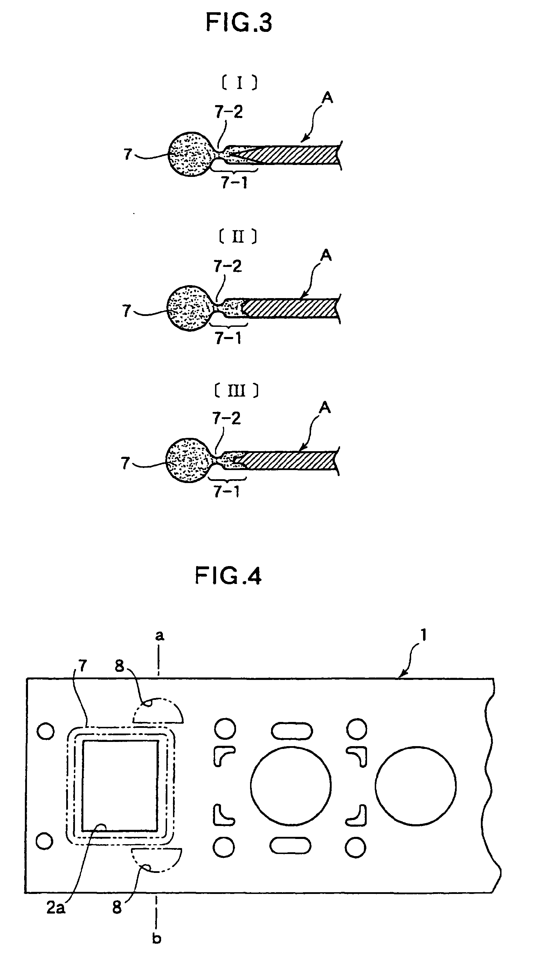

The rubber elastic seal member 7 having a circle type cross-section is simple to interposing a metal gasket side shown by Fig. 2. It may apply to constitution joining with the metal gasket as shown by Figs. 3(I) to (III).

Fig. 3(I) is constitution that is set a tapered part in the metal gasket and is set an elastic seal member 7 in the taper part to inner side part. In a joint part 7-1, a compressed part 7-2 to be a way of escape when elastic seal member 7 is compressed is set.

Fig. 3(II) may be applied to the tapered part is trapezoid and Fig. 3(III) may be applied to the tapered part is a tapered concave form or an another tapered form. By comparing a constitution of Fig. 2, constitutions of Figs. 3(I) to (III) may be compressed up to plating thickness of the metal gasket.

The above elastic seal member is not limited to a circle type cross section. For example, it may apply to a rectangular shape. When the member 7 may be obtained the above seal function, then it is applicable another cross section form to select and use optionally.

Material of the elastic seal member is not limited to rubber material. When material having a rubber elasticity is used, then it is applicable another material to select and use optionally. The above metal gasket may be not used a metal plate, but a laminated thin plate having thermo-resistivity.

The above metal gasket is no special limitation of the constitution, for example, it may applicable to a constitution that a superposed portion of the surface on chain case is formed independently, and the superposed portion is combined with a metal gasket superposed cylinder block on the surface.

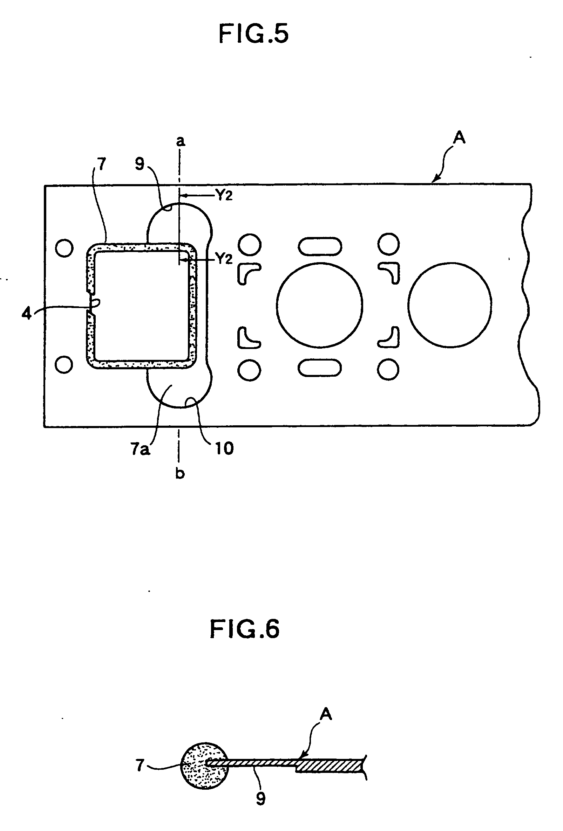

Another example (not in accordance with the present invention) is shown in Figs. 5 and 6. The present embodiment is substituted a concave-like different in level part 9 for the through hole 8 of the before mentioned embodiment. The above concave-like different in level part 9 is formed by cutting work in predetermined depth from surface of a metal part analogous to the three contacting area portion and by pressing.

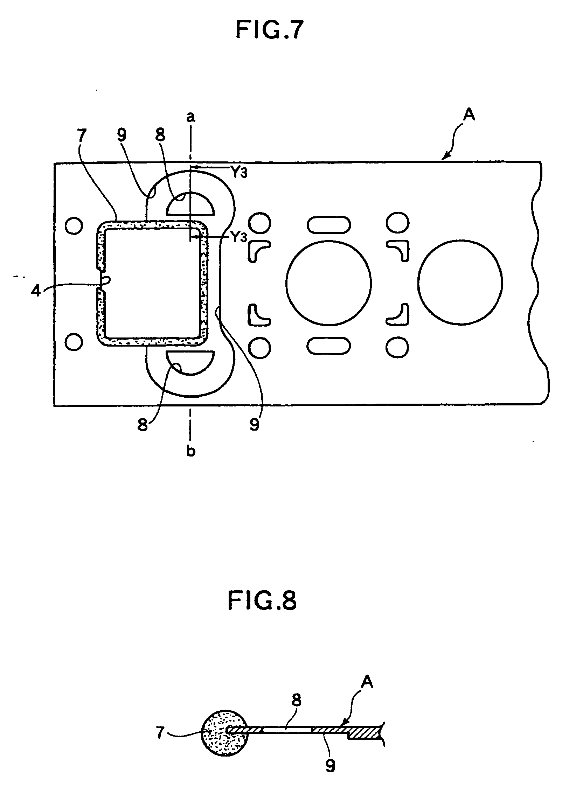

Furthermore, another example (not in accordance with the present invention) is shown in Figs. 7 and 8. The present embodiment is having both of a concave-like different in level part 9 and a through hole 8.

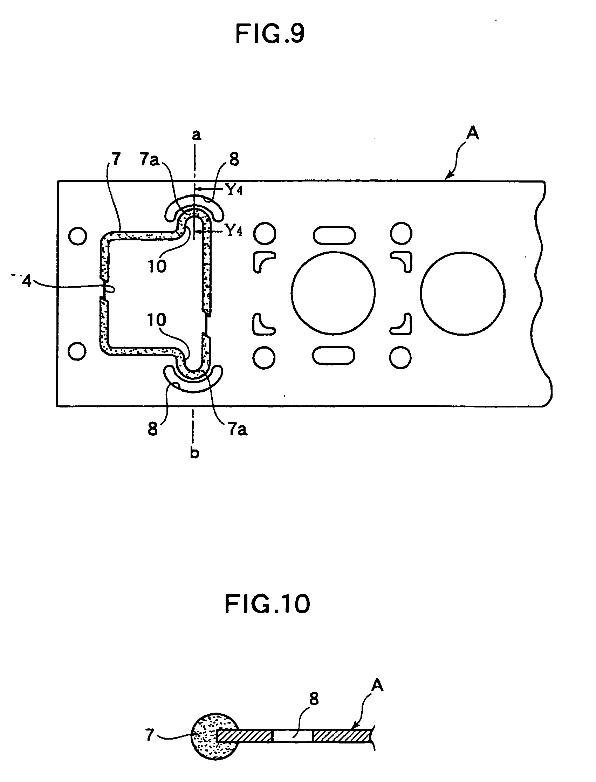

Furthermore, an embodiment in accordance with the present invention is shown by Figs. 9 and 10. The present embodiment is a constitution that is set by inflating a part arranged the three contacting area portion with the metal plate part of the metal gasket so that the seal trace is directed outside, and a void part 10, formed by the inflated part 7a, is a store part of liquid gasket material. A through hole 8, set outside the store part, is also a storing means of liquid gasket material.

By applying the above described constitution, when a cylinder head and chain case and/or cylinder block is overtightened, the liquid gasket material is prevented from contacting the elastic seal member.

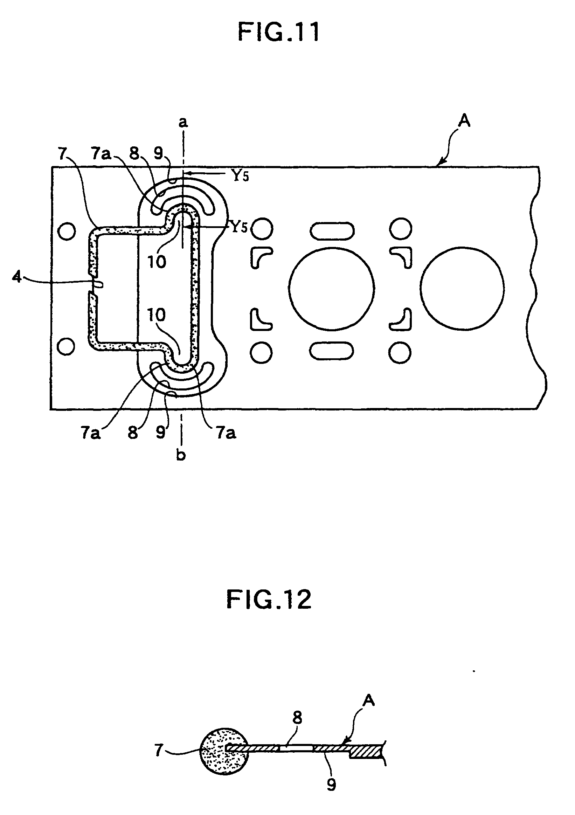

Figs. 11 and 12 show another embodiment of the present invention.

The present embodiment is constituted by combination of the through hole 8 of the embodiment according to Figs. 9 and 10 and the concave-like different in level part 9 of the example according to Figs. 5 and 6.

According to each of the above-mentioned embodiments, it is preferred that a protecting pellicle is applied to the elastic seal member and furthermore, not only the elastic seal member, but also the metal plate may be coated.

Figs. 13 to 16 show another example (not in accordance with the present invention).

A is a metal gasket, inner rim of an opening for chain 4 of the metal gasket A, rubber elastic seal member 7 is set by interposing. Fig. 14 shows elastic seal member 7 cut along a line Y₁-Y₁ of Fig. 13.+

According to the present invention, there is provided a metal gasket having superior seal characteristics which can be maintained for a long period of time without deterioration.

## Claims

1. A metal gasket (A) for sealing a three-contact area region of a cylinder block, a chain case and a cylinder head, the metal gasket (A) comprising
a through opening (4) configured to receive a chain therethrough and having an elastic seal member (7) provided on an inner rim perimeter thereof, and
storing means (8, 10) configured to receive therein a liquid gasket material disposed in said region and being used for sealing said region together with said metal gasket (A),
**characterised in that** said storing means (8, 10) is defined by an enlargement (7a) of the through opening (4), the enlargement (7a) being located within the perimeter of the elastic seal member (7) and defining a cavity (10),
and by a through hole (8) provided externally of the elastic seal member (7) and adjacent to said enlargement (7a),
and **in that** said cavity (10) and said through hole (8) are configured to contain, in use, liquid gasket material squeezed therein in response to overtightening the connection between the cylinder head and the chain case and/or the cylinder block to thereby prevent contact of the liquid gasket material with the elastic seal member (7).

2. The metal gasket (A) according to claim 1, wherein said metal gasket (A) has a region of reduced thickness (9).

3. The metal gasket (A) according to claim 2, wherein said through hole (8) is located in said region of reduced thickness (9).

4. The metal gasket according to any one of claims 1 to 3, wherein said elastic seal member (7) is provided in conjunction with a protective pellicle, coating or covering.

5. A combination of a cylinder block, a chain case and a cylinder head, together with a metal gasket (A) as defined in any one of claims 1 to 4.

## Patentansprüche

1. Metalldichtung (A) zum Abdichten eines Bereichs dreier Kontaktflächen eines Zylinderblocks, eines Kettengehäuses und eines Zylinderkopfs, wobei die Metalldichtung (A) umfasst:
eine Durchgangsöffnung (4), welche zur Aufnahme einer Kette durch diese ausgebildet ist, und welche an einem inneren Randumfang derselben ein elastisches Dichtungselement (7) aufweist, und
ein Speichermittel (8, 10), welches zur Aufnahme eines flüssigen Dichtungsmaterials darin ausgebildet ist, das in dem Bereich angeordnet ist und zusammen mit der Metalldichtung (A) zum Abdichten des Bereichs verwendet wird,
**dadurch gekennzeichnet, dass** das Speichermittel (8, 10) durch eine Vergrößerung (7a) der Durchgangsöffnung (4) definiert ist, wobei die Vergrößerung (7a) innerhalb des Umfangs des elastischen Dichtungselements (7) angeordnet ist und einen Hohlraum (10) definiert,
und durch ein außerhalb des elastischen Dichtungselements (7) und der Vergrößerung (7a) benachbart vorgesehenes Durchgangsloch (8),
und dass der Hohlraum (10) und das Durchgangsloch (8) derart ausgebildet sind, dass sie bei Verwendung dorthinein gedrücktes flüssiges Dichtungsmaterial enthalten, als Reaktion auf ein übermä-βiges Festziehen der Verbindung zwischen dem Zylinderkopf und dem Kettengehäuse und/oder dem Zylinderblock, um **dadurch** einen Kontakt des flüssigen Dichtungsmaterials mit dem elastischen Dichtungselement (7) zu verhindern.

2. Metalldichtung (A) nach Anspruch 1, wobei die Metalldichtung (A) einen Bereich (9) mit verringerter Dicke aufweist.

3. Metalldichtung nach Anspruch 2, wobei das Durchgangsloch (8) in dem Bereich (9) mit verringerter Dicke angeordnet ist.

4. Metalldichtung nach einem der Ansprüche 1 bis 3, wobei das elastische Dichtungselement (7) in Verbindung mit einer schützenden Haut, Beschichtung oder Abdeckung vorgesehen ist.

5. Kombination eines Zylinderblocks, eines Kettengehäuses und eines Zylinderkopfs, zusammen mit einer Metalldichtung (A) gemäß einem der Ansprüche 1 bis 4.

## Revendications

1. Joint métallique (A) pour étancher une région à trois contacts d'un bloc-cylindres, d'un carter de chaîne et d'une culasse, le joint métallique (A) comprenant :
une ouverture traversante (4) configurée pour recevoir une chaîne en son sein et comportant un élément d'étanchéité élastique (7) disposé sur son périmètre de bordure interne, et
un moyen de stockage (8, 10) configuré pour recevoir en son sein un matériau de joint liquide disposé dans ladite région et étant utilisé pour étancher ladite région conjointement audit joint métallique (A),
**caractérisé en ce que** ledit moyen de stockage (8, 10) est défini par un agrandissement (7a) de l'ouverture traversante (4), l'agrandissement (7a) étant situé au sein du périmètre de l'élément d'étanchéité élastique (7) et définissant une cavité (10),
et par un trou traversant (8) ménagé extérieurement à l'élément d'étanchéité élastique (7) et adjacent audit agrandissement (7a),
et **en ce que** ladite cavité (10) et ledit trou traversant (8) sont configurés pour contenir, à l'utilisation, le matériau de joint liquide comprimé en leur sein en réponse à un serrage excessif de la connexion entre la culasse et le carter de chaîne et/ou le bloc-cylindres afin d'empêcher un contact du matériau de joint liquide avec l'élément d'étanchéité élastique (7).

2. Joint métallique (A) selon la revendication 1, dans lequel ledit joint métallique (A) comporte une région d'épaisseur réduite (9).

3. Joint métallique (A) selon la revendication 2, dans lequel ledit trou traversant (8) est situé dans ladite région d'épaisseur réduite (9).

4. Joint métallique selon l'une quelconque des revendications 1 à 3, dans lequel ledit élément d'étanchéité élastique (7) est fourni conjointement à une enveloppe, un revêtement ou une pellicule de protection.

5. Combinaison d'un bloc-cylindres, d'un carter de chaîne et d'une culasse, conjointement à un joint métallique (A) tel que défini selon l'une quelconque des revendications 1 à 4.
